# EUROPÄISCHE PATENTANMELDUNG

(11) **EP 3 165 995 A1**
(43) Veröffentlichungstag der Anmeldung: **10.05.2017**
(21) Anmeldenummer: 16002349.5
(22) Anmeldetag: 04.11.2016
(51) Int. Cl.: G06F 3/01

(54) **ADAPTIVES VISUALISIERUNGSSYSTEM UND VISUALISIERUNGSVERFAHREN**

(30) Priorität: 04.11.2015 DE 102015014119
(71) Anmelder: Tennagels, Thomas, 40627 Düsseldorf (DE)
(72) Erfinder: Tennagels, Thomas, 40627 Düsseldorf (DE)
(74) Vertreter: Cohausz Hannig Borkowski Wißgott

(57) **Zusammenfassung**

Die Erfindung betrifft ein Visualisierungssystem sowie ein Verfahren zur Visualisierung eines virtuellen dreidimensionalen Objekts in einem perspektivischen Ausschnitt einer virtuellen Realität auf einem Bildschirm (5), bei dem der Bildschirm (5) innerhalb eines realen Bewegungsraums (16), zu dem die virtuelle Realität in einem festen oder festlegbaren räumlichen Bezugsverhältnis steht, relativ zu der Position und Blickrichtung eines Nutzers (2) mechanisch nachgeführt wird, und gleichzeitig eine blickwinkelgerechte und/ oder positionsgerechte Anpassung der Darstellung des perspektivischen Ausschnitts der virtuellen Realität auf dem Bildschirm (5) an die geänderte Position und/ oder Blickrichtung erfolgt.

## Beschreibung

Die Erfindung betrifft ein Verfahren und eine Vorrichtung zur Visualisierung eines virtuellen dreidimensionalen Objekts in einem perspektivischen Ausschnitt einer virtuellen Realität auf einem Bildschirm.

Bei der Präsentation von Objekten auf Ausstellungen, Messen, in Showrooms oder sonstigen Präsentationsplattformen bedient man häufig der Computervisualistik und stellt auf Bildschirmen anstelle der realen Objekte computergerenderte Darstellungen der Objekte dar, weil es für das Objekt beispielsweise noch keinen realen Prototypen gibt oder das Objekt zu groß wäre, um es real zu zeigen, oder weil es nicht oder nur schwer transportiert werden kann. Von Autoherstellern sind zum Bespiel virtuelle Showrooms bekannt, in denen die Fahrzeuge nicht physisch ausgestellt sind, sondern lediglich in einer virtuellen Erlebniswelt auf Monitoren oder Leinwänden gezeigt werden. Ein solcher virtueller Showroom, den man sich über das Internet ansehen kann, ist beispielsweise in der US-Anmeldung US 2014/0152806 A1 beschrieben.

Ferner sind Systeme und Verfahren bekannt, um mit einer virtuellen Umgebung zu interagieren. Dazu gehört in erster Linie die Bewegungssteuerung, d.h. eine bewegungsabhängige Anpassung der Darstellungen auf einem Bildschirm, insbesondere die Gestensteuerung, bei der durch gezielte Bewegungen beispielsweise der Hände, Finger, Arme und des Kopfes die Bildschirmdarstellung manipuliert werden kann, und die blickrichtungsabhängige Anpassungen der

Bildschirmdarstellung. Dies ist beispielsweise in den internationalen Patentanmeldungen WO 2012/047905 A2 und WO 2011/041466 A1 beschrieben, auf deren Inhalt hier vollumfänglich Bezug genommen wird. Die dort beschriebenen Interaktionsverfahren mit der virtuellen Umgebung setzen in der realen Welt fest montierte oder vom Benutzer gehaltene Bildschirme voraus, wodurch die Verwendung in autarken Präsentationsumgebungen eingeschränkt ist.

Im Präsentations- und Medienbereich werden des Weiteren kinetische Installationen immer beliebter. Dabei handelt es sich um Präsentationen mit bewegten Elementen, beispielsweise Werbeträger oder bewegte Monitore. So sind beispielsweise fahrbare Präsentationstafeln bekannt. Diese zeigen jedoch nur statische Bilder an.

Die deutsche Patentanmeldung DE 10 2005 004 448 A1 beschreibt ein Anzeigegerät auf einem Fahrwerk, das mit Sensoren ausgestattet ist, welche eine manuelle Änderung des Fahrwerks relativ zum Fußboden erkennen, wobei eine Recheneinheit die Darstellung eines Gegenstands aus einer Betrachtungsposition und einem Betrachtungswinkel auf der Anzeige erzeugt und entsprechend der Sensorinformationen die Betrachtungsposition und/ oder den Betrachtungswinkel abhängig von der Bewegung des Fahrwerks relativ zum Fussboden ändert.

Ferner ist aus der DE 19719038 A1 eine Vorrichtung zur interaktiven Darstellung eines Gegenstands auf einem manuell beweglich montierten Bildschirm bekannt, die ebenfalls einen Sensor zur Bestimmung des Standorts, der Lage und der Orientierung des Bildschirms aufweist, und letztendlich die Bewegung des Bildschirms ermittelt. Aus den Sensordaten wird die Blickrichtung auf den Gegenstand ermittelt und eine dieser Blickrichtung entsprechende Darstellung des Gegenstands erzeugt und angezeigt.

Es ist daher Aufgabe der vorliegenden Erfindung, die im Stand der Technik bekannten Präsentationsverfahren und Vorrichtungen weiter zu entwickeln und virtuelle dreidimensionale Darstellungen für einen anspruchsvollen Kundenkreis, im Rahmen einer autonomen kinetischen Installation nutzerbewegungsgesteuert in Szene zu setzen.

Diese Aufgabe wird durch ein Verfahren mit den Merkmalen des Anspruchs 1 sowie durch eine Vorrichtung mit den Merkmalen des Anspruchs 7 gelöst. Vorteilhafte Weiterbildungen sind in den Unteransprüchen angegeben und werden nachfolgend beschrieben.

Gemäß eines ersten Aspekts der Erfindung wird ein Verfahren zur Visualisierung eines virtuellen dreidimensionalen Objekts in einem perspektivischen Ausschnitt einer virtuellen Realität auf einem Bildschirm bereitgestellt, bei dem der Bildschirm innerhalb eines realen Bewegungsraums, zu dem die virtuelle Realität in einem festen oder festlegbaren räumlichen Bezugsverhältnis steht, relativ zu der Position und Blickrichtung eines Nutzers mechanisch nachgeführt wird, und gleichzeitig eine blickwinkelgerechte und/ oder positionsgerechte Anpassung der Darstellung des perspektivischen Ausschnitts der virtuellen Realität auf dem Bildschirm an die geänderte Position und/ oder Blickrichtung erfolgt.

Gemäß eines zweiten Aspekts der Erfindung wird ein Visualisierungssystem zur Visualisierung eines virtuellen dreidimensionalen Objekts in einem perspektivischen Ausschnitt einer virtuellen Realität auf einem Bildschirm bereitgestellt, umfassend
- mehrere Sensoren zur Erfassung der Position und/ oder Blickrichtung eines Nutzers innerhalb eines realen Bewegungsraums, zu dem die virtuelle Realität in einem festen oder festlegbaren Bezugsverhältnis steht,
- einen auf einer Haltevorrichtung montierten Bildschirm, wobei die Haltevorrichtung über Gelenke verbundene Arme aufweist, um den Bildschirm in zumindest drei Freiheitsgeraden bewegen zu können, und
- eine zentrale Recheneinheit, die dazu eingerichtet ist, den Bildschirm (5) innerhalb des Bewegungsraums relativ zu der Position und Blickrichtung eines Nutzers mechanisch nachzuführen und gleichzeitig eine die Darstellung des perspektivischen Ausschnitts der virtuellen Realität auf dem Bildschirm an die geänderte Position und/ oder Blickrichtung blickwinkelgerecht und/ oder positionsgerecht anzupassen.

Kerngedanke der vorliegenden Erfindung ist es, einen sich nutzerabhängig bewegenden bzw. bewegbaren Bildschirm bereitzustellen, der auf Basis unterschiedlicher Sensorinformationen einen Nutzer und seine Interaktionen erkennt und seine Position relativ zum Nutzer anpasst. Gleichzeitig wird auf dem Bildschirm zumindest eine virtuelle Realität mit zumindest einem Objekt dargestellt, die ebenfalls in Abhängigkeit vom Nutzer automatisch angepasst wird. Durch die mit den Nutzerinteraktionen koordinierte Bewegung des Bildschirms und der Bildschirminhalte ist es möglich, wie durch ein Fester in die virtuelle Realität zu blicken und sich diese in vollen 360° anzusehen, während sich der Nutzer innerhalb des räumlich begrenzen Bewegungsraums befindet.

Soweit hier von einer virtuellen Realität die Rede ist, sei angemerkt, dass hier die auf dem Bildschirm gezeigte Welt gemeint ist. So kann es sich bei der virtuellen Realität um eine künstliche, d.h. generierte Umgebung handeln. Es ist jedoch auch möglich, dass eine reale Umgebung fotografisch aufgenommen und als virtuelle Umgebung auf dem Bildschirm dargestellt wird. Das Objekt, beispielsweise ein Auto, kann dabei ein rein virtuelles Objekt, d.h. ein von einem Computer berechnetes und erstelltes Objekt sein, das in diese Realität hineingesetzt wird. Dies ist als "Augmented Reality" bekannt. Gleichwohl handelt es sich dabei im Sinne der Erfindung um eine virtuelle Umgebung, die auf dem Bildschirm dargestellt wird.

Ferner sei zum Begriffsverständnis angemerkt, dass ein "Objekts in einem perspektivischen Ausschnitt einer virtuellen Realität" nicht unbedingt erfordert, dass das Objekt von anderen Objekten im Sinne einer Szenerie umgeben sein muss. Vielmehr kann die Umgebung auch rein einfarbig sein. Die virtuelle Realität besteht in diesem Fall nur aus dem Objekt.

Soweit hier von einem festen oder festlegbaren Bezugsverhältnis zwischen dem realen Bewegungsraum und der virtuellen Realität die Rede ist, ist darunter zu verstehen, dass jeder Punkt innerhalb des Bewegungsraums, der sich in der realen Welt befindet, als auch jeder Punkt der auf dem Bildschirm dargestellten virtuelle Realität jeweils durch Koordinaten eines bestimmten, beispielsweise eines kartesischen Koordinatensystem beschrieben werden kann, und diese beiden Koordinatensysteme in einem Bezugsverhältnis zu einander stehen. Aus Sicht des Nutzers bedeutet dies, dass das virtuelle Objekt in der virtuellen Realität bezogen auf die Position des Nutzers fest steht. Wenn sich der Nutzer in der Realität relativ zum Bildschirm bewegt, bewegt er sich folglich auch relativ zum virtuellen Objekt. Im einfachsten Fall ist das Verhältnis aller Koordinatenachsen 1:1, so dass die reale Welt und die virtuelle Realität nahtlos und unverzerrt ineinander übergehen können.

Vorzugsweise wird der Abstand zwischen dem Nutzer und dem Bildschirm ermittelt und bei kleiner werdendem Abstand eine größer werdende Darstellung des Objekts auf dem Bildschirm dargestellt, und bei größer werdendem Abstand eine kleiner werdende Darstellung des Objekts auf dem Bildschirm dargestellt wird. Dies bedeutet, dass bei kleiner werdendem Abstand in die virtuelle Realität auf dem Bildschirm hinein gezoomt wird, so dass insbesondere eine größere Detailvielfalt ersichtlich wird, und bei größer werdendem Abstand aus der virtuellen Realität auf dem Bildschirm heraus gezoomt wird, so dass die Detailtiefe abnimmt. Der Bildschirm wirkt hier dann wie eine magische Lupe.

Die Nachführung des Bildschirms kann derart erfolgen, dass zumindest ein Punkt der Bildschirmfläche, insbesondere der Mittelpunkt des Bildschirms in der Blickrichtung des Nutzers liegt. Zusätzlich oder alternativ kann die Nachführung derart erfolgen, dass die Bildschirmfläche im Wesentlich rechtwinklig zur Blickrichtung oder parallel zur Gesichtsausrichtung des Nutzers ausgerichtet wird.

Bei dem Bildschirm kann es sich um ein nicht-transparentes Display handeln, beispielsweise einen Monitor beliebiger Technologie wie TFT, LCD, LED oder OLED. Auf der Rückseite des Bildschirms kann eine Kamera zur Aufnahme eines Bildes der realen Umgebung aus Sicht des Bildschirms und Darstellung auf dem Bildschirm angebracht sein. Dies ermöglicht eine vereinfachte "Video-See-Through" Augmented Reality-Darstellung in der das reale Bild als Kamerabild dargestellt wird.

Alternativ hierzu kann der Bildschirm ein transparentes OLED-Display sein. In diesem Fall muss nicht erst ein Bild von der realen Umgebung aufgenommen und das darzustellende Objekt dort hineingesetzt werden, um eine Darstellung des virtuellen Objekts in der Realität zu erhalten. Denn aufgrund der Transparenz des Displays sieht man die Umgebung hinter dem Display, in welcher das auf dem Bildschirm dargestellte Objekt automatisch eingebettet ist. Auf diese Weise kann das virtuelle Objekt im Sinne einer "Optical-See-Through" Augmente Reality-Darstellung betrachtet werden.

Darüber hinaus kann das Display eine berührungssensitive Oberfläche derart aufweisen, dass die Darstellung auf dem Bildschirm durch seine Berührung interaktiv gesteuert wird. Vorzugsweise ist der Bildschirm ein Touchpanel oder ein kapazitives Display.

Die Haltevorrichtung kann geeigneterweise ein Roboterarm sein. Dabei umfasst die Haltevorrichtung vorzugsweise mindestens drei Gelenke, von denen ein erstes Gelenk eine Drehung des Bildschirms um eine vertikale Achse gewährleistet. Ein zweites und drittes Gelenk können jeweils eine Drehung um eine horizontale Achse ermöglichen, so dass der Monitor innerhalb einer Vertikalebene eine x,y-Position einnehmen kann. Insgesamt ergibt sich dadurch eine mechanische Bewegbarkeit des Bildschirms im Raum in den drei Freiheitsgraden (X,Y-Position, Drehung um die Z-Achse). Gemäß einer Ausführungsvariante kann das zweite Gelenk, direkt mit dem ersten Gelenk drehbar verbunden sein. Zwischen dem zweiten und dritten Gelenk kann sich ein Verbindungsarm erstrecken. Ferner kann das dritte Gelenk über einen Haltearm mit dem Bildschirm verbunden sein. Es ist darüber hinaus möglich, dass die Haltevorrichtung weitere Gelenke und Arme aufweist, um die Flexibilität bei der Beweglichkeit des Monitors zu erhöhen.

Durch die Anzahl und Art der Gelenke und Arme sowie durch die Länge der Arme ist der maximale Abstand (Radius) von der vertikalen Achse festgelegt, die der Bildschirm erreichen kann. Hierdurch ist auch der Bewegungsraum des bewegbaren Bildschirms festgelegt, der insbesondere eine Kreisfläche mit der Haltevorrichtung im Zentrum und vorzugsweise mit einem Radius ist, der maximal im Wesentlichen der Summe der Armlängen der Haltevorrichtung entspricht.

Die Haltevorrichtung ist auf einem Unterbau montiert, der als Sockel ausgebildet sein kann und bestimmungsgemäß fest im Zentrum des Bewegungsraums steht. Von besonderem Vorteil ist es jedoch, wenn der Unterbau ein fahrbares Untergestell ist. Auf diese Weise kann die vertikale Achse im Raum bewegt werden, wodurch der Aktionsbereich des erfindungsgemäßen Visualisierungssystem erheblich vergrößert wird. Das fahrbare Untergestell kann beispielsweise ein Schienenwagen sein, oder ein Wagen mit sogenannten Mecanum-Rädern sein, um omnidirektionale Fahrmanöver ausführen zu können.

Gemäß einer vorteilhaften Weiterbildung des erfindungsgemäßen Visualisierungssystems können Lage- und Gewichtssensoren an der Haltevorrichtung, dem Bildschirm und/ oder dem Unterbau angebaut sein, um den Schwerpunkt des Bildschirms samt Haltevorrichtung zu ermitteln. Aus den Sensordaten kann dann der Schwerpunkt der Haltevorrichtung samt Bildschirm ermittelt und die Bewegung des Bildschirms respektive der Haltevorrichtung in Abhängigkeit des Schwerpunkts so gesteuert werden, dass die Bewegung kippfrei ist. Demgemäß erfolgt die Bewegungssteuerung so, dass, dass ein Umstürzen oder Kippen des Systems verhindert wird. Entsprechend kann das Visualisierungssystem Mittel zur kippfreien Steuerung aufweisen, insbesondere Softwaremittelt, durch welche der aktuell ermittelte Schwerpunkt mit einem Grenzschwerpunkt verglichen wird. Wird der Grenzschwerpunkt erreicht oder unter Berücksichtigung eines Sicherheitsabstands erreicht oder überschritten, kann beispielsweise die Bewegung gestoppt und der Monitor in eine standsichere Position zurückgefahren werden.

Alternativ oder zusätzlich können die Mittel zur kippfreien Steuerung eingerichtet sein, einen Bewegungsweg von der aktuellen Position des Bildschirms oder des Schwerpunkts zu einer prognostizierten Zielposition des Bildschirms oder des Schwerpunkts derart zu berechnen, dass entlang des Bewegungsweges der Grenzschwerpunkt nicht überschritten wird. Denn in der Regel gibt es mehrere Bewegungswege, entlang derer der Bildschirm bzw. die Haltevorrichtung bewegt werden können, von denen ein Teil eine Grenzschwerpunktüberschreitung bewirken kann, während bei anderen Bewegungswegen keine Grenzschwerpunktüberschreitung stattfinden würde. Ein solcher grenzschwerpunktüberschreitungsfreier Bewegungsweg wird von den Mittel zur kippfreien Steuerung ermittelt und die Haltevorrichtung entsprechend so angesteuert, dass die Bewegung des Bildschirms entlang dieses ermittelten Bewegungsweges erfolgt.

Bei einem Teil der Sensoren kann es beispielsweise um optische, insbesondere bildgebende Kameras handeln, beispielsweise um IR-Kameras, Tiefenkameras, Wärmebildkameras oder RGB-Kameras, oder auch eine Kombination dieser Kameratechnologien. Ideal ist es zudem, wenn die Sensoren aus einer Kombination verschiedener Sensortypen bestehen. Denn jeder Sensor hat stärken und schwächen, so dass das Visualisierungssystem durch die Kombination verschiedener Sensortypen wenig störanfällig und robust wird.
Die Sensoren bilden vorzugsweise ein zusammenwirkendes Sensornetz derart, dass sie gemeinsam den gesamten Bewegungsbereich erfassen. Hierzu können die Sensoren über dem Bewegungsraum in einem Abstand oberhalb des Bildschirms, insbesondere ringförmig angeordnet sein. Die Sensordaten können an eine zentrale Recheneinheit übertragen werden, wo eine entsprechende Auswertrung dieser Daten und die Bestimmung der Position des Nutzers relativ zum Bildschirm erfolgt. Auch kann erkannt werden, ob sich ein Nutzer dem Display nähert oder sich von diesem entfernt. Diese den Bewegungsbereich global erfassenden Sensoren können als erste Erkennungseben betrachtet werden.

Vorzugsweise erfolgt über die dem Bewegungsbereich zugeordneten Sensoren auch eine Erkennung sonstiger Objekte, die nicht der Nutzer sind. Insbesondere kann der Bildschirm samt Haltevorrichtung sowie jedwedes Hindernis, insbesondere auch dessen Position relativ zum Bildschirm bestimmt werden. Die Erkennung kann über passive oder aktive Marker erfolgen oder über Objekterkennung, (Structure from Motion) oder anhand modellbasierter Ansätze, wie sie im Stand der Technik an sich bekannt sind. Auf diese Weise können Hindernissen erkannt und Kollisionen mit diesen Hindernissen während des Systembetriebs vermieden werden. Alle Trackingmethoden besitzen hier entsprechende Verfahren, die dem Gesamtsystem eine Kollision melden. So kann der Bewegungsraum kontinuierlich sensorisch überwacht und auf die Präsenz eines Hindernisses überprüft werden. Ist der Bildschirm bei Erkennung eines Hindernisses in Bewegung, wird diese Nachführung gestoppt, sobald eine Kollision mit dem Hindernis ermittelt wird.

Geeigneterweise ist von den Sensoren zumindest ein Nahfeldsensor am bewegbaren Bildschirm angeordnet, der die direkte Umgebung vor dem Bildschirm erkennt. Dabei kann es beispielsweise um eine RGB+Tiefenbildkamera handeln, gegebenenfalls ergänzt durch eine Thermobildkamera und/ oder eine Infrarotkamera, wie sie heutzutage bereits zur Gestensteuerung von Spielekonsolen und Interaktion mit virtuellen Realitäten am Bildschirm eingesetzt werden. Derartige Nahfeldsensoren sind bekannt, so dass auf ihre hardwaretechnische Ausgestaltung nicht eingegangen werden muss. Verwiesen wird hier insbesondere auf die unter der Bezeichnung "Kinect" von den Firmen Microsoft® und PrimeSense entwickelte Hardware zur Steuerung der Videospielekonsole "Xbox 360", die seit Anfang des Jahres 2010 verkauft wird. Eine alternative Technologie stellt die von der Firma Intel® zur Gestensteuerung von PCs, Tablets und Notebooks entwickelte Sensorik "RealSense" dar. Ein eine Infrarotkamera verwendender Nachfeldsensor, der feingranulare Interaktionsgesten auf Basis von Fingertracking erkennen kann, ist unter dem Namen "Leap Motion" bekannt und wird von der Firma Leap Motion, Inc hergestellt und vertrieben.

Die Nahfeldkamera oder -kameras erkennen einen oder mehrere Personen direkt vor dem bewegbaren Bildschirm und ermitteln und verfolgen in Echtzeit die exakten Körperbewegungen des Nutzers, insbesondere dessen Blickrichtung (Eyetracking), Gesichtsausrichtung (Facetracking), und/ oder Fingerbewegungen (Finger Tracking) vor dem Bildschirm. Diese Erkennung erfolgt vorzugsweise ebenfalls durch Fusionierung der verschiedenen Sensordaten und ggf. einer Analyse der Körperbewegung und Erkennung spezifische Interaktionsgesten, wie z. B. Zeigen und weitere Arm- und Handgesten. Die Sensordaten werden geeigneterweise'an die zentrale Recheneinheit in Echtzeit übermittelt und dort verarbeitet und ausgewertet. Die Erkennung von Nutzergesten durch die Nahfeldkamera oder-kameras können als zweite Erkennungsebene, die Erkennung von Blickrichtung (Eyetracking) und/ oder Gesichtsausrichtung (Facetracking) als dritte Erkennungsebene verstanden werden. Beim Facetracking können auch Emotionen des Nutzers ermittelt werden. Auf der dritten Erkennungseben erfolgt eine Identifikation verschiedener persönlicher Parameter der interagierenden Person. Hier können ebenfalls unterschiedliche Erkennungsverfahren eingesetzt werden, um die direkten Aktionen und Intentionen des Nutzers möglichst exakt und robust zu identifizieren und zu verarbeiten.

Weitere Merkmale und Vorteile der Erfindung werden nachfolgend anhand eines Ausführungsbeispiels und der beigefügten Figuren erläutert. Es zeigen:
- Figur 1:: eine schematische Darstellung des Visualisierungssystems mit bewegbarem Bildschirm
- Figur 2:: eine erste Darstellung der Wirkungsweise des Visualisierungssystems mit einer Ausrichtung des bewegbaren Bildschirm gemäß einer ersten Blickrichtung eines Betrachters
- Figur 3:: eine zweite Darstellung der Wirkungsweise des Visualisierungssystems mit einer Ausrichtung des bewegbaren Bildschirm gemäß einer zweiten Blickrichtung eines Betrachters

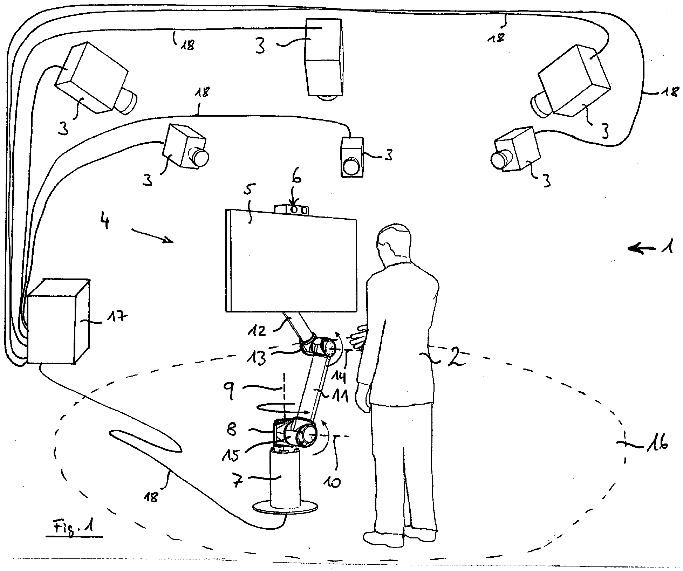

Figur 1 zeigt ein Visualisierungssystem 1 sowie einen Nutzer 2, der innerhalb eines Bewegungsraums 16 vor einem bewegbaren Bildschirm 5 steht, der zentraler Bestandteil des Visualisierungssystems 1 ist. Der Bildschirm 5 ist mit einer motorisch bewegbaren Haltevorrichtung 4 verbunden, die im Zentrum des Bewegungsraums 16 angeordnet ist.

Die Haltevorrichtung 4 ist auf einem Unterbau in Gestalt eines Sockels 7 montiert, der fest auf dem Boden steht. Ein erstes Drehgelenk 8 ist mechanisch mit dem Unterbau verbunden und drehbar um eine Vertikalachse 9 (z-Achse) drehbar. Ein zweites Drehgelenk 15 ist mit dem ersten Drehgelenk 8 mechanisch verbunden und stellt eine Drehbarkeit um eine erste horizontale Achse 10 bereit, die durch das erste Drehgelenk 8 verläuft. Das zweite Drehgelenk 15 ist am Ende eines Verbindungsarms 11 angeordnet, der um die erste horizontale Achse 10 schwenkbar ist und dessen gegenüberliegendes Ende ein drittes Drehgelenk 13 trägt. Ein Haltearm 12 verbindet dieses dritte Drehgelenk 13 mit dem Bildschirm 5, wobei der Haltearm 12 um eine zweite horizontale Achse 14 geschwenkt werden kann, die durch das dritte Gelenk 13 verläuft. Der Haltearm 12 kann rückseitig des Bildschirms direkt starr mit diesem verbunden sein.

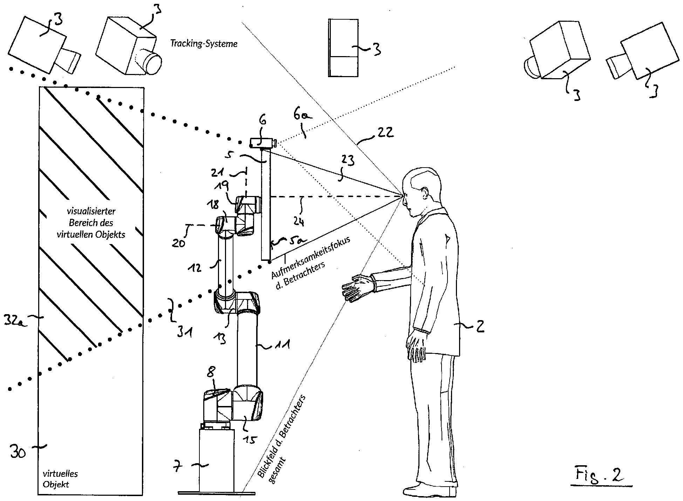

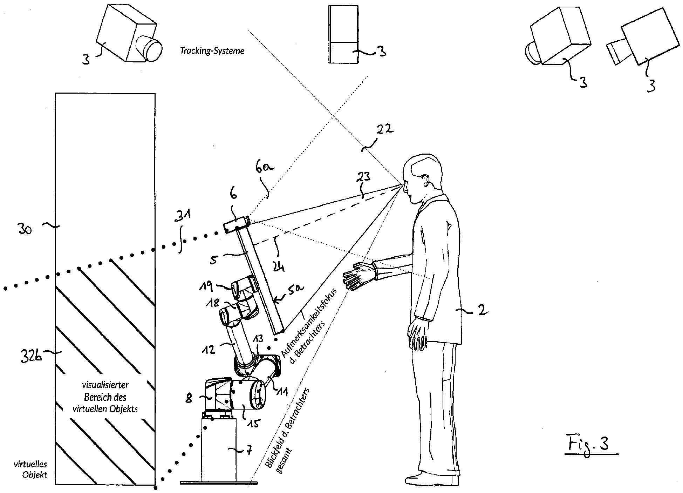

Alternativ kann der Haltearm über ein oder mehr weiteres Gelenk(e) 18, 19 mit dem Bildschirm 5 verbunden sein, so dass beispielsweise ein Drehen und/ oder Kippen des Bildschirms 5 relativ zum Haltearm 12 ermöglicht, wie dies in Figuren 2 und 3 ersichtlich ist. So ist in der in den Figuren 2 und 3 gezeigten Ausführungsvariante am Ende des Haltearms 12 ein erstes weiteres Drehgelenk 18, dass eine Drehung um eine weitere Horizontalachse 20 ermöglicht, die parallel zu den anderen Horizontalachsen 10, 14 liegt. Zusätzlich ist mit diesen ersten weiteren Drehgelenk 18 ein zweites weiteres Drehgelenk 19 verbunden, dass eine Drehung um eine weitere Vertikalachse 21 ermöglicht, die parallel zu der anderen Vertikalachse 9 liegt.

Die Drehgelenke 8, 13, 15, 18, 19 der Haltevorrichtung 4 werden elektromotorisch angetrieben. Insgesamt entspricht die Haltevorrichtung einem Roboterarm, wie er typischerweise in der Fertigungsindustrie eingesetzt wird. Durch die Anzahl der Gelenke und Arme sowie die Länge der Arme ist der Raumbereich festgelegt, innerhalb dem der Bildschirm bewegt werden kann. Bei horizontal ausgerichteten Armen 11, 12 entspricht der Abstand zwischen Bildschirm 5 und Vertikalachse 9 einem Radius, der wiederum die Abmessung des Bewegungsraums 16 definiert.

In einer nicht dargestellten Ausführungsvariante kann der Unterbau relativ zum Boden des Bewegungsraumes bewegbar, insbesondere fahrbar sein. So kann der Unterbau beispielsweise als Schienenfahrzeug auf entsprechenden Gleisen fahren. Alternativ kann der Unterbau Räder, beispielsweise Mecanum-Räder aufweisen, durch die der Bildschirm 5 verfahrbar ist.

Die Gesamtbewegung des Bildschirms 5 einschließlich der darauf gezeigten Inhalte erfolgt in Echtzeit durch folgende Möglichkeiten, die interaktiv und in Kombination unabhängig voneinander angesteuert werden können:
- eine Bewegung des Bildschirms 5 in einer Horizontalebene parallel zum Boden durch den Unterbau (schienen- oder räderbasiert), wobei hier zusätzlich eine Hubbewegung möglich ist, so dass der Bildschirm in 3 Freiheitsgraden bewegbar ist.
- eine Bewegung des Bildschirms 5 durch die Haltevorrichtung 4 (Roboterarm), wobei hier die Anzahl der Freiheitsgrade abhängig von der Anzahl und Art der Gelenke ist.
- eine Bewegung der Inhalte auf dem Displays (6 Freiheitsgrad in einer virtuellen 3D-Welt)

Dabei erfolgt in Abhängigkeit der Nutzerposition, seiner Blickrichtung und/ oder Gesichtsausrichtung eine koordinierte Kombination aller möglichen "Bewegungen". Im Falle eines immobilen Unterbaus 7, wie er in den Figuren gezeigt ist, entfällt die Bewegbarkeit des Bildschirms 5 in einer Horizontalebene parallel zum Boden durch den Unterbau. Es erfolgt dann eine koordinierte Kombination der anderen möglichen "Bewegungen".

Erfindungsgemäß wird der Bildschirm 5 innerhalb des realen Bewegungsraums 16, zu dem eine auf dem Bildschirm 5 gezeigte virtuelle Realität in einem festen oder festlegbaren räumlichen Bezugsverhältnis steht, relativ zu der Position und Blickrichtung eines Nutzers 2 mechanisch nachgeführt. Gleichzeitig erfolgt eine blickwinkelgerechte und/ oder positionsgerechte Anpassung der Darstellung des perspektivischen Ausschnitts der virtuellen Realität auf dem Bildschirm 5, sofern sich die Position und/ oder Blickrichtung des Nutzers ändert.

Dabei erfolgt die Nachführung zum einen derart, dass der Mittelpunkt der Bildschirmfläche in der Blickrichtung des Nutzers 2 liegt, zum anderen derart, dass die Bildschirmfläche im Wesentlich rechtwinklig zur Blickrichtung oder parallel zur Gesichtsausrichtung des Nutzers 2 ausgerichtet wird. Dies ist in den Figuren 2 und 3 veranschaulicht.

Figur 2 zeigt eine Seitenansicht des Visualisierungssystems 1 mit einem vor dem Bildschirm 5 stehenden Betrachter 2. Der Betrachter hat ein Blickfeld 22, innerhalb dem sich der Bildschirm 5 befindet. Ein Teilbereich des Blickfeldes 22 ist der Aufmerksamkeitsfokus 23, der direkt auf den Bildschirm 5 gerichtet ist. Innerhalb des Aufmerksamkeitsfokus 23 liegt die Blickrichtung 24 des Betrachters 2. In Figur 2 liegt diese Blickrichtung 24 senkrecht zur Bildschirmfläche 5a. Auf dem Bildschirm 5 wird ein perspektivischer Ausschnitt 31 einer virtuellen Realität visualisiert, in der sich ein virtuelles Objekt 30 befindet. Wie in Figur 2 zu erkennen ist, ist dieses virtuelle Objekt 30 größer als der perspektivische Ausschnitt 31, so dass in dem Ausschnitt 31 nur ein Teilbereich 32, hier der obere Bereich des virtuellen Objekts 30 sichtbar ist. Der perspektivische Ausschnitt 31 ist quasi die Verlängerung des Aufmerksamkeitsfokus auf den virtuellen Bereich "hinter" bzw. in dem Bildschirm 5.

Es wird nun der Fall angenommen, dass der Betrachter seine Blickrichtung nach unten schwenkt, beispielsweise um ca. 20°. Hierdurch wird auch der Aufmerksamkeitsfokus nach unten geschwenkt. Der Bildschirm 5 wird nun mechanisch derart nachgeführt, dass die Blickrichtung 24 die Bildschirmfläche 5a wieder rechtwinklig trifft. Hierzu wird der Bildschirm 5 durch die kombinierte Bewegung mehrerer Gelenke in der Vertikalen abgesenkt und nach hinten zum virtuellen Objekt 30 gekippt. Gleichzeitig erfolgt eine blickwinkelgerechte Anpassung des auf dem Bildschirm 5 gezeigten perspektivischen Ausschnitts 31 der virtuellen Realität, so dass nun ein anderer Teilbereich, genauer gesagt der untere Teilbereich 32b des virtuellen Objekts 30 auf dem Bildschirm 5 visualisiert wird.

Das Visualisierungssystem 1 umfasst mehrere Sensoren 3, 6, die die Umgebung des Bildschirms 5 überwachen. Diese Sensoren 3, 6 liefern auf unterschiedliche Art und Weise Informationen über den Bewegungsraum 16 und die darin befindlichen Objekte, insbesondere den Personen oder die Person 2. Dabei bestimmt ein Algorithmus auf Basis dieser verschiedenen Sensorwerte, welche Objekte an welcher Position im Raum stehen und welche minimalen bzw. maximalen Abstände in der jeweiligen Nutzungssituation notwendig sind, um Kollisionen zu vermeiden.

Räumlich über dem Bewegungsraum 16 und oberhalb des Nutzers 2 befinden sich eine Anzahl an Kameras 3, beispielsweise übliche RGB-Kameras, die hier im Kreis angeordnet sind und gemeinsam den gesamten Bewegungsbereich 16 erfassen. Sie bilden eine erste Erfassungsebene, bei der es um die Erkennung der weiteren Umgebung des Bildschirms 5 geht. Die Kameras 3 erkennen zu jedem Zeitpunkt an welchen Stellen sich Objekte, Personen und das mobile Display befinden, und können ferner bei zeitlicher Änderung dieser Positionen erkennen, ob sich in den Bewegungsbereich 16 hinein bewegt, d.h. zum Bildschirm hin bewegt, oder aus dem Bewegungsbereich 16 heraus bewegt, d.h. vom Bildschirm weg bewegt. Dies entspricht einem sogenannten Outside-In Tracking der groben Bewegungen des Nutzers.

An der oberen Kante des bewegten Bildschirms 5 ist eine Nahfeldsensorik 6 montiert, die die genauen Bewegungen der Person bzw. der Personen innerhalb eines Erfassungsbereichs 6a vor dem Bildschirm erkennen. Hierbei handelt es um eine Tiefenbildkamera und eine Infrarotkamera, die den Blickwinkel und die Gesichtsausrichtung des Nutzers 2 sowie seine Gesten, z.B. Arm- und Handbewegungen, zu jedem Zeitpunkt erkennen. Ferner können sie die zeitliche Änderung des Blickwinkels oder der Gesichtsausrichtung erfassen und somit den Blickwinkel (Eyetracking) oder die Gesichtsausrichtung (Facetracking) verfolgen. Dies entspricht einem sogenannten Inside-Out Tracking der feinen Bewegungen des Nutzers 2, das Teil einer zweiten Erfassungsebene ist.

Hinsichtlich der Detailtiefe, kann die Nahfeldsensorik oder eine weitere Sensorik auch kleine und kleinste Bewegungen des Nutzers, beispielsweise der Finger (Fingertracking) oder die Gesichtsmimik erfassen und verfolgen. Dies ist Teil einer dritten Erfassungsebene, bei der es um die Erkennung der feinsten Bewegungen des Nutzers 2 geht.

Die verschiedenen Trackingereignisse werden an eine zentrale Systemkomponente 17 geschickt und dort weiterverarbeitet. In der Figur ist diese als zentrale Recheneinheit 17, beispielsweise ein Computer dargestellt. Mit dieser Recheneinheit sind alle Sensoren 3, 6 durch jeweils eine Datenleitung 18 zur Übertragung der Sensorinformationen verbunden. Ebenfalls ist die Haltevorrichtung mit einer solchen Datenleitung 18 verbunden, über die die Steuerbefehle an die Elektromotoren zur Drehwinkeleinstellung der Drehgelenke übertragen werden. Eine Übertragung der Sensordaten und Steuerbefehle per Funk ist jedoch auch möglich.

Es besteht die Möglichkeit, dass mehr als ein Nutzer 2 vor dem Bildschirm 5, oder bei gegebenenfalls weggeschwenktem Bildschirm zumindest vor der Haltevorrichtung steht, oder sich mehrere Personen, und folglich potentielle Betrachter im Bewegungsraum 16 befinden. In diesem Fall muss eine Auswahl getroffen werden, zu welcher Person der Bildschirm bewegt wird, denn alle Personen im Bewegungsraum 16 sind Ziele für die Bewegung.

Auf Basis einer hierarchischen Struktur der verschiedenen Ziele wird entschieden wie die virtuellen Inhalte auf dem Bildschirm 5 respektive die Haltevorrichtung 4 reagieren sollen. Diese Hierarchie wird applikationsspezifisch erstellt und besteht aus einer Reihe vordefinierter "Verhaltensweisen", die auf einfache Weise in einem Softwarewerkzeug angeordnet werden können.

Beispielsweise kann eine Priorisierung der Personen im Bewegungsraum nach bestimmten Kriterien erfolgen.

Ein Kriterium kann beispielsweise der Abstand zur aktuellen Position des Bildschirms, zur Haltevorrichtung oder zur vertikalen Drehachse sein. So kann eine Person, die näher zu der aktuellen Position des Bildschirms steht priorisiert werden, weil der Bildschirm dann am wenigsten bewegt werden muss. Alternativ kann eine Person priorisiert werden, die näher zur vertikalen Drehachse steht, weil eine Bewegung des Bildschirms im vertikalachsennahen Bereich das Risiko eines Kippens minimalhält, bzw. ein größerer Bewegungsspielraum bis zum Erreichen des Grenzschwerpunkts vorliegt.

Ein anderes Kriterium kann die Verweildauer einer Person im Bewegungsraum 16 sein. Je länger sich eine Person im Bewegungsraum 16 aufhält, desto höher wird sie - als potentielles Bewegungsziel priorisiert.

Ein anderes Kriterium kann die Bewegungsgeschwindigkeit sein. Aufgrund der zwangsläufig vorhandenen Trägheit der motorisch bewegten Haltevorrichtung kann schnellen Blickwinkeländerungen schlecht gefolgt werden. Je langsamer sich deshalb eine Person bewegt, desto höher wird sie als potentielles Bewegungsziel priorisiert.

Der Bildschirm wird dann gemäß zumindest eines der genannten Kriterien geeigneterweise zu derjenigen Person bewegt und zu dieser ausgerichtet, die am höchsten priorisiert ist.

Das Visualisierungssystem 1 erkennt den Nutzer im Bewegungsraum 16 auf unterschiedlichen Detaillierungsebenen (erste, zweite und dritte Ebene) und richtet den Bildschirm 5 einerseits physisch relativ zum Nutzer 2 aus, und ändert andererseits die Darstellung des virtuellen Objekts auf dem Bildschirm in Abhängigkeit der Position und Blickrichtung des Nutzers relativ zum Bildschirm. Eine zentrale Funktionalität der Erfindung ist die blickwinkelgerechte Darstellung virtueller Inhalte auf dem Bildschirm auf Basis der unterschiedlichen fusionierten Trackinginformationen (3D-Registrierung). Der Bildschirm richtet sich in Bezug auf die Nutzerposition und Nutzerorientierung, Blickwinkel und Körper- und Gesichtsgesten so aus, dass immer der korrekte Bereich des virtuellen Objekts angezeigt wird. Diese Interaktion erfolgt auf Basis der HCl-Metapher "Magische Lupe" / "Magisches Fenster". Das Display fungiert als Fenster in eine virtuelle Welt bzw. eine Mixed Reality Welt. Dies hat mehrere technische Wirkungen und Vorteile. Zum einen wird erreicht, dass stets die korrekte 3D-Perspektive in Abhängigkeit vom Betrachter auf dem Bildschirm 5 dargestellt wird. Ferner ist eine Betrachtung des virtuellen Objekts um 360°, d.h. von allen Seiten möglich, indem der Nutzer 2 um den Bildschirm 5, bzw. um den Unterbau 7 herumgeht. Dadurch kann eine räumlich größere virtuelle Welt auf dem Bildschirm gezeigt werden, als wenn man nur durch ein statisches 3D-Display schaut bzw. sich vor diesem bewegt. Der Bildschirm 5 wandert mit dem Nutzer mit und zeigt jeweils die passenden virtuellen Inhalte an, d.h. denjenigen sichtbaren Ausschnitt der virtuellen Realität der blickwinkelgerecht dem entspricht, was der Nutzer sehen würde, wenn der Bildschirm ein sich bewegendes Fenster in die virtuelle Realität wäre. Hierzu ist der Koordinatenraum der virtuellen Realität in Bezug zum Koordinatenraum der realen Welt festgelegt. Die virtuelle Realität ändert sich folglich relativ zur Position und Blickrichtung des Nutzers 2 nicht. Es ändert sich lediglich die Blickrichtung in die virtuelle Realität.

Zusätzlich kann ein Rein- und Rauszoomen des virtuellen Inhalts durch Nutzerinteraktion, z. B. durch Gesten, durch Näherkommen, Spracheingabe oder Touchinteraktion erfolgen. Hierbei wird das Bezugsverhältnis der realen Welt zur virtuellen Realität auf einen Wert kleiner eins bzw. größer eins geändert. Auch ist es möglich, Selektion, Manipulation bzw. semantisches Zoomen der virtuellen Inhalte durch spezifische körperbasierte Interaktionstechniken vorzunehmen.

Gemäß einer Weiterbildung der Erfindung bewegt sich der Bildschirm 5 respektive die Haltevorrichtung 4 real in einer bestimmten Art und Weise und repräsentiert dabei durch geeignete Basisbewegungen bestimmte emotionale Zustände, z. B. Aufregung oder Freundlichkeit. Durch diese bewegungsrepräsentierten Emotionen soll sich der nachhaltige Präsentationeindruck auf den Betrachter 2 verstärken.

Gemäß einer anderen Weiterbildung der Erfindung können zwei oder mehr Bildschirme eine koordinierte Bewegung im Bewegungsraum oder jeweiligen Bewegungsraum durchführen. Insbesondere können diese Bildschirme eine synchrone Bewegung vollführen. Auf den Bildschirmen ist sinnvollerweise dieselbe virtuelle Realität dargestellt, so dass der Nutzer 2 mehr von dieser virtuellen Realität sieht, als bei einem Bildschirm. Da der Nutzer jedoch nur einen Bildschirm betrachten kann, demgegenüber dann beispielsweise eine erster Blickrichtung vorliegt, liegt der andere Bildschirm, der unmittelbar oder in einem Abstand zum ersten Bildschirm angeordnet sein kann, zwangsläufig in einer zweiten Blickrichtung, die um einen Blickwinkel größer als 0°, beispielsweise zwischen 20° und 45° von der ersten Blickrichtung geschwenkt ist. Es werden deshalb verschiedene perspektivische Ansichten derselben virtuellen Realität, insbesondere desselben virtuellen Objekts gemäß dieser verschiedenen Blickwinkel auf den Bildschirmen gezeigt. Schwenkt der Nutzer seinen Blick auf den zweiten Bildschirm, braucht der erste Bildschirm nicht nachgeführt zu werden, da der zweite Bildschirm bereits den blickrichtungsgerecht richtigen Ausschnitt aus der virtuellen Realität zeigt. Insgesamt ist eine Nachführung der Bildschirme nicht erforderlich, solange der Nutzer eine Blickrichtung hat, die zwischen der ersten und zweiten Blickrichtung liegt. Schwenk sein Blick weiter oder in eine andere Richtung, werden beiden Bildschirme nachgeführt, insbesondere derart, dass sich zumindest einer der Bildschirme in etwa wieder so ausrichtet, dass sein Bildmittelpunkt in der Blickrichtung liegt und seine Bildschirmfläche rechtwinklig hierzu liegt.

Die Erfindung ist u.a. für folgende Einsatzgebiete ideal geeignet:
- Präsentationen auf Messe / Event - Veranstaltungen
- Informationsunterstützung in öffentlichen Gebäuden, z. B. Museen, Tourismuszentren, öffentliche Verwaltung
- Verkürzung von Wartezeiten / Unterhaltung in typischen Wartesituationen z. B. auf Flughäfen, Bahnhöfen, etc.
- Werbung im öffentlichen Raum, z. B. Shopping-Malls, Einkaufszentren, Schaufenster
Erläuterung komplexer technischer Systeme, z. B. in Produktionssystemen

## Patentansprüche

1. Verfahren zur Visualisierung eines virtuellen dreidimensionalen Objekts (30) in einem perspektivischen Ausschnitt (31) einer virtuellen Realität auf einem Bildschirm (5), **dadurch gekennzeichnet, dass** der Bildschirm (5) innerhalb eines realen Bewegungsraums (16), zu dem die virtuelle Realität in einem festen oder festlegbaren räumlichen Bezugsverhältnis steht, relativ zu der Position und Blickrichtung (24) eines Nutzers (2) mechanisch nachgeführt wird, und gleichzeitig eine blickwinkelgerechte und/ oder positionsgerechte Anpassung der Darstellung des perspektivischen Ausschnitts (31) der virtuellen Realität auf dem Bildschirm (5) an die geänderte Position und/ oder Blickrichtung (24) erfolgt.

2. Verfahren nach Anspruch 1, **dadurch gekennzeichnet, dass** der Abstand zwischen dem Nutzer (2) und dem Bildschirm (5) ermittelt und bei kleiner werdendem Abstand eine größer werdende Darstellung des Objekts (30) auf dem Bildschirm (5) dargestellt wird und bei größer werdendem Abstand eine kleiner werdende Darstellung des Objekts (30) auf dem Bildschirm (5) dargestellt wird.

3. Verfahren nach Anspruch 1 oder 2, **dadurch gekennzeichnet, dass** während vor und/ oder während der Bildschirmbewegung der Schwerpunkt des Bildschirms (5) samt einer diesen nachführenden Haltevorrichtung (4) bestimmt und die Bewegung des Bildschirms (5) in Abhängigkeit des Schwerpunkts so gesteuert wird, dass sie kippfrei ist.

4. Verfahren nach einem der vorhergehenden Ansprüche, **dadurch gekennzeichnet, dass** der Bewegungsraum (16) kontinuierlich sensorisch überwacht und auf die Präsenz eines Hindernisses überprüft wird, und dass die Nachführung gestoppt wird, sobald eine Kollision mit dem Hindernis ermittelt wird.

5. Verfahren nach einem der vorhergehenden Ansprüche, **dadurch gekennzeichnet, dass** die Nachführung derart erfolgt, dass zumindest ein Punkt der Bildschirmfläche (5a), insbesondere der Mittelpunkt des Bildschirms (5) in der Blickrichtung (24) des Nutzers (2) liegt.

6. Verfahren nach einem der vorhergehenden Ansprüche, **dadurch gekennzeichnet, dass** die Nachführung derart erfolgt, dass die Bildschirmfläche (5a) im Wesentlich rechtwinklig zur Blickrichtung (24) oder parallel zur Gesichtsausrichtung des Nutzers (2) ausgerichtet wird.

7. Visualisierungssystem (1) zur Visualisierung eines virtuellen dreidimensionalen Objekts (30) in einem perspektivischen Ausschnitt (31) einer virtuellen Realität auf einem Bildschirm (5), **gekennzeichnet durch**
- mehrere Sensoren (3, 6) zur Erfassung der Position und/ oder Blickrichtung (24) eines Nutzers (2) innerhalb eines realen Bewegungsraums (16), zu dem die virtuelle Realität in einem festen oder festlegbaren Bezugsverhältnis steht,
- einen auf einer Haltevorrichtung (4) montierten Bildschirm (5), wobei die Haltevorrichtung (4) über Gelenke (8, 13, 15) verbundene Arme (11, 12) aufweist, um den Bildschirm (5) in zumindest drei Freiheitsgeraden bewegen zu können, und
- eine zentrale Recheneinheit (17), die dazu eingerichtet ist, den Bildschirm (5) innerhalb des Bewegungsraums (16) relativ zu der Position und Blickrichtung (24) eines Nutzers (2) mechanisch nachzuführen und gleichzeitig eine die Darstellung des perspektivischen Ausschnitts (31) der virtuellen Realität auf dem Bildschirm (5) an die geänderte Position und/ oder Blickrichtung (24) blickwinkelgerecht und/ oder positionsgerecht anzupassen.

8. Visualisierungssystem (1) nach Anspruch 7, **dadurch gekennzeichnet, dass** der Bildschirm (5) auf einem fahrbaren Untergestellt montiert ist.

9. Visualisierungssystem (1) nach Anspruch 7 oder 8, **dadurch gekennzeichnet, dass** der Bildschirm (5) ein transparentes OLED-Display ist oder auf der Rückseite des Bildschirms (5) eine Kamera zur Aufnahme eines Bildes der realen Umgebung aus Sicht des Bildschirms (5) und Darstellung auf dem Bildschirm (5) angeordnet ist.

10. Visualisierungssystem (1) nach einem der Ansprüche 7 bis 9, **dadurch gekennzeichnet, dass** die Haltevorrichtung (4) ein Roboterarm ist.

11. Visualisierungssystem (1) nach einem der Ansprüche 7 bis 10, **dadurch gekennzeichnet, dass** die Haltevorrichtung mindestens drei Gelenke (8, 13, 15) umfasst, von denen ein erstes Gelenk (8) eine Drehung des Bildschirms (5) um eine vertikale Achse, ein zweites und drittes Gelenk (13, 15) jeweils eine Drehung um eine horizontale Achse ermöglichen, so dass der Bildschirm (5) innerhalb einer Vertikalebene eine x,y-Position einnehmen kann.

12. Visualisierungssystem (1) nach einem der Ansprüche 7 bis 11, **dadurch gekennzeichnet, dass** sie Lage- und Gewichtssensoren zur Berechnung des Schwerpunkts der Haltevorrichtung und Mittel zur kippfreien Bewegungssteuerung aufweist.

13. Visualisierungssystem (1) nach einem der Ansprüche 7 bis 12, **dadurch gekennzeichnet, dass** zumindest ein Teil der Sensoren (3) bildgebende Kameras sind, die über dem Bewegungsraum (16) in einem Abstand oberhalb des Bildschirms (5), insbesondere ringförmig angeordnet sind, um die Position des Nutzers (2) relativ zum Bildschirm (5) zu ermitteln.

14. Visualisierungssystem (1) nach einem der Ansprüche 7 bis 13, **dadurch gekennzeichnet, dass** von den Sensoren (3, 6) zumindest ein Sensor (6) am bewegbaren Bildschirm (5) zur Erkennung der direkten Umgebung vor dem Bildschirm (5) und zur Blickrichtungserkennung und/ oder Gesichtsausrichtungserkennung des Nutzers (2) angeordnet ist.

15. Visualisierungssystem (1) nach Anspruch 14, **dadurch gekennzeichnet,**
**dass** der am bewegbaren Bildschirm (5) angeordnete Sensor eine RGB-Tiefenbildkamera, eine Thermobildkamera oder Infrarotkamera ist.
